# FASCICULE DE BREVET EUROPEEN

(11) **EP 1 789 282 B1**
(45) Date de publication et mention de la délivrance du brevet: **18.06.2008**
(21) Numéro de dépôt: 05781871.8
(22) Date de dépôt: 28.06.2005
(51) Int. Cl.: B60N 3/06

(54) **ELEMENT ABSORBANT POUR PIED DE PASSAGER DE VEHICULE AUTOMOBILE**
DÄMPFUNGSELEMENT FÜR DEN FUSS EINES KRAFTFAHRZEUGINSASSEN
ABSORBING ELEMENT FOR THE FOOT OF A PASSENGER IN A MOTOR VEHICLE

(30) Priorité: 03.09.2004 FR 0409377
(43) Date de publication de la demande: 30.05.2007
(73) Titulaire: RENAULT S.A.S., 92100 Boulogne Billancourt (FR)
(72) Inventeur: BOUILLON, Jean-Charles, F-78340 LES CLAYES SOUS BOIS (FR); ESPANOL, Sophie, F-91190 GIF SUR YVETTE (FR); PORTIER, Laurent, F-78000 VERSAILLES (FR)
(74) Mandataire: Rougemont, Bernard
(86) Numéro de dépôt international: PCT/FR2005/050511
(87) Numéro de publication internationale: WO 2006/027506

(56) Documents cités:
- FR-A- 2 801 257
- FR-A- 2 844 234
- PATENT ABSTRACTS OF JAPAN vol. 1999, no. 02, 26 février 1999 (1999-02-26) & JP 10 297345 A (HONDA MOTOR CO LTD), 10 novembre 1998 (1998-11-10)

## Description

L'invention concerne un élément absorbant pour pied de passager de véhicule automobile et plus particulièrement un élément absorbant de pied localisé à proximité d'un passage de roue.

Afin de limiter les risques de blessure au niveau des membres inférieurs d'un passager de véhicule automobile lors d'un accident, il est utilisé des éléments, qui sont disposés sous les pieds, destinés à absorber l'énergie cinétique d'une partie du choc. Cette absorption limite en particulier les blessures au niveau de la cheville, du tibia et également du genou.

Les éléments absorbants, sont généralement formés par un élément en polystyrène expansé qui travaille en compression pendant le choc et le transfert de masse du passager vers les pieds en appuis sur le sol. L'élément absorbant est généralement noyé dans une épaisseur de mousse polyuréthane pour l'acoustique, recouvert dans sa partie supérieure d'une moquette destinée à la circulation des passagers.

Différentes solutions existent dans les dispositions de l'élément absorbant en fonction de l'architecture du véhicule, tel que décrit par exemple dans la publication FR-A-2.844.234.

JP 10 297 345 décrit un élément absorbant selon le préambule de la revendication 1.

Le pied localisé à proximité de l'extérieur du véhicule et plus particulièrement à proximité du passage de roue, formant un bossage de la carrosserie sur lequel vient s'appuyer le pied, nécessite un traitement particulier. Ce bossage reçoit généralement un élément absorbant en polystyrène, du même type que celui utilisé pour les autres pieds.

Une telle utilisation engendre des problèmes de comportement du pied pendant le choc et en particulier un glissement latéral et/ou un pivotement latéral de la cheville, autour d'un axe longitudinal du pied, entraînant des lésions sur l'articulation du pied ou sur le tibia, par une mauvaise position du pied pendant l'absorption, par l'élément absorbant, de l'énergie cinétique du choc.

En fonction de l'inclinaison de la zone d'appui, qui est un paramètre ergonomique défini par la hauteur de l'assise du siège, le pied aura également une tendance à glisser vers le haut pendant le choc, augmentant ainsi les risques d'une mauvaise position d'appui du pied et par conséquent les risques de blessure.

Afin de pallier ces inconvénients, l'invention a pour objet un élément absorbant pour pied, localisé à proximité d'un passage de roue, permettant une bonne stabilité du pied pendant la phase d'absorption de l'énergie cinétique du choc, par l'utilisation de moyens latéraux de stabilisation de part et d'autre du pied.

L'invention a également pour objet, un élément absorbant limitant le glissement du pied vers le haut et plus particulièrement un élément absorbant permettant de conserver une ligne d'appui fixe au niveau des orteils du pied et une zone déformable sous le talon.

Selon une **caractéristique** de l'invention, l'élément absorbant pour pied comporte deux ailes latérales, comportant des extrémités basses formant des zones d'appui avec le plancher lors des phases de l'absorption de l'énergie cinétique, localisées de part et d'autre du plan d'appui, lesdites ailes étant reliées transversalement par un pontet de stabilisation qui se prolonge sensiblement verticalement par des nervures sur les faces latérales des ailes jusqu'à former deux zones d'appui complémentaires comprise dans un même plan que les extrémités basses des ailes extérieure et intérieure.

Selon une autre **caractéristique** de l'invention, l'aile extérieure a une direction sensiblement perpendiculaire au plan d'appui, et s'étend sur une longueur correspondant à une limite basse du plan d'appui, formée par une butée de talon, jusqu'à une limite haute située sensiblement au milieu du plan d'appui.

Selon une autre **caractéristique** de l'invention, l'aile intérieure est inclinée d'un angle α par rapport à la direction XX' perpendiculaire au plan d'appui.

Selon une autre **caractéristique** de l'invention, l'angle α est compris entre 20° et 60°.

Selon une autre **caractéristique** de l'invention, l'aile intérieure est reliée au plan d'appui par une portion de raccord sensiblement perpendiculaire au plan d'appui.

Selon une autre **caractéristique** de l'invention, l'aile intérieure à une longueur sensiblement égale à la longueur s'un plan d'appui sous commande qui jouxte ladite aile intérieure.

Selon une autre **caractéristique** de l'invention, l'extrémité basse de l'aile intérieure formant une zone de contact avec le plancher lors de la phase d'absorption de l'énergie cinétique du choc, est proéminente par rapport à la partie inférieure du plan d'appui sous poste de commande.

Selon une autre **caractéristique** de l'invention, le plan d'appui comporte une limite haute, formée par deux points d'appui, sur une partie du passage de roue du véhicule, réparties de part et d'autre du pied.

D'autres **caractéristiques** et avantages de l'invention, apparaîtront à la lecture de la description d'exemples de réalisation d'un élément absorbant pour pied de passager de véhicule automobile aux dessins annexés dans lesquels :
- La figure 1 représente une vue perspective de la partie avant de l'habitacle d'un véhicule automobile comportant une zone de repose pied localisée à proximité d'un passage de roue.
- La figure 2 représente une élévation latérale d'une partie de l'élément absorbant selon l'invention.
- La figure 3 représente une vue de dessus schématisée de la position du pied sur l'élément absorbant selon l'invention.
- La figure 4 représente une section suivant l'axe 4-4 de la figure 2.
- La figure 5 représente une vue perspective de dessous de l'élément absorbant selon l'invention.

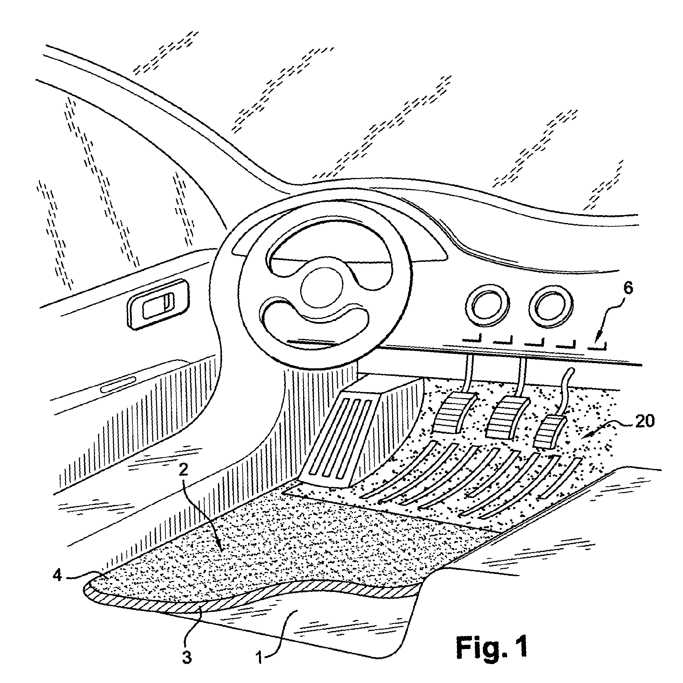

Tel que représenté à la figure1, le plancher du véhicule 1 porte un revêtement 2 constitué d'une mousse 3 et d'une moquette 4 formant la partie supérieure dudit revêtement 2. La partie avant 20 du revêtement 2 se prolonge par un plan incliné jusqu'au poste de conduite 6 constitué d'un ensemble de pédales de commande. Le revêtement 2 de plancher 1 s'étend latéralement jusqu'au coté de la carrosserie formant un bossage de passage de roue.

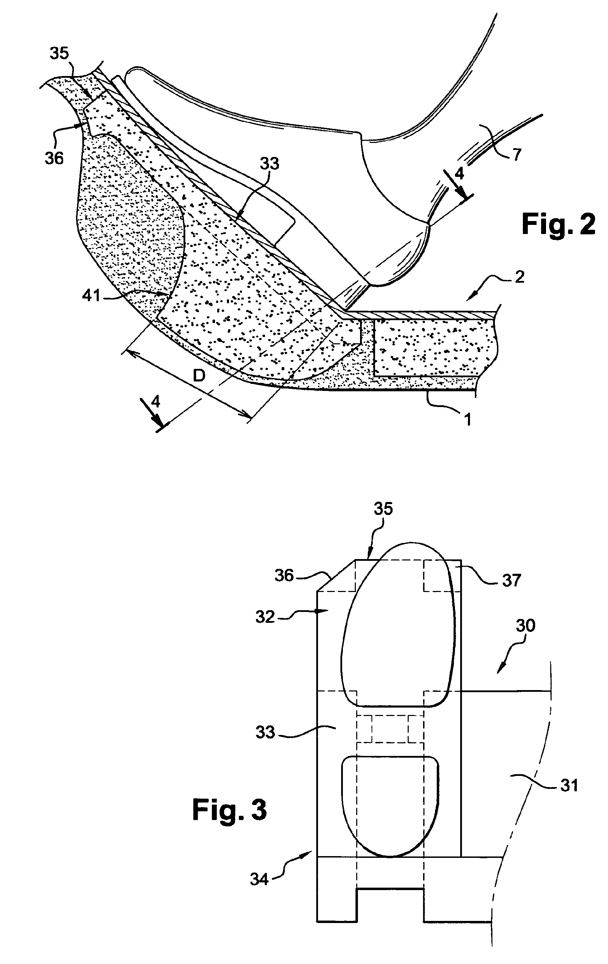

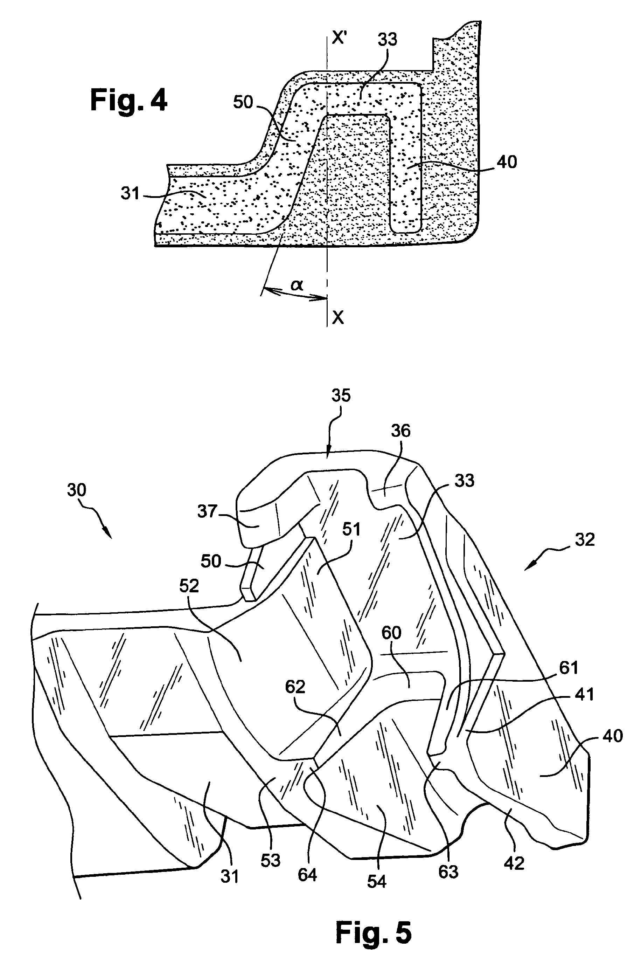

Tel que représenté aux figures 2 à 5, le revêtement 2 comporte au moins dans sa partie avant 20, un élément absorbant 30 d'absorption de l'énergie cinétique d'un choc destiné à la protection des membres inférieurs 7. L'élément absorbant 30 comporte une partie d'appui 31 située sous le poste de commande 6 destinée en particulier à absorber les chocs lorsque les pieds sont positionnés au niveau des pédales. L'élément absorbant 30 se prolonge latéralement par un bossage 32 repose-pied, destiné à recouvrir la partie du passage de roue entrant dans l'habitacle, lorsque le pied est en position de repos.

La partie 32 de l'élément absorbant 30 formant repose-pied est constitué d'un plan d'appui 33 qui comporte deux ailes latérales 40 et 50. Le plan d'appui 33 s'étend sur une longueur compatible avec les pieds de la population utilisant les véhicules automobiles, entre une limite basse 34, formée d'un décrochement constituant une butée du talon, et une limite haute 35, formée par deux points d'appui 36 et 37, sur le passage de roue, réparties de part et d'autre du pied. Le plan d'appui 33 est d'une épaisseur suffisante située entre 20 et 40 mm, pour résister aux décélérations du véhicule et pour se déformer lors d'une contrainte importante. Les points d'appui 36 et 37 sont répartis entre un point d'appui extérieur 36 et un point d'appui intérieur 37, chacun ayant une hauteur qui correspond sensiblement a l'écart existant entre le plan d'appui 33 et la tôle du passage de roue. De part leur localisation le point d'appui extérieur 36 est d'une hauteur inférieure au point d'appui intérieur 37.
Les ailes latérales 40 et 50 sont de formes différentes en fonction de leur emplacement, et correspondent à :
- une aile extérieure 40 de direction sensiblement perpendiculaire au plan d'appui 33,
- une aile intérieure 50 inclinée d'un angle α par rapport à la direction XX' perpendiculaire au plan d'appui 33. L'aile intérieure 50 est reliée au plan d'appui 33 par une portion de raccord 51 sensiblement perpendiculaire au plan d'appui 33. L'angle α est compris entre 20° et 60°.

L'aile extérieure 40 s'étend sur une longueur correspondant de la limite basse 34 jusqu'à une limite haute 41 située sensiblement au milieu du plan d'appui 33, correspondant à titre d'exemple approximativement à une dimension D comprise entre 100 et 120 mm. L'aile intérieure 50 rejoint le plan d'appui 31 sous poste de commande et à une longueur correspondant sensiblement à celle du plan d'appui 31 sous poste de commande. Une fine nervure 52 prolonge l'aile intérieure 50 jusqu'au point d'appui intérieur 37. Une extrémité basse 53 de l'aile intérieure 50 formant une zone de contact avec le plancher 1 lors de la phase d'absorption de l'énergie cinétique du choc, est proéminente par rapport à la partie inférieure du plan d'appui 31 sous poste de commande qui jouxte l'aile intérieure 50. L'aile extérieure 40 comporte une extrémité basse 42 qui forme une zone contact localisé sensiblement dans le même plan que celle de l'aile intérieure 50. Les ailes extérieures 40 et intérieures 50 sont réunies transversalement par l'intermédiaire d'un pontet de stabilisation 60 localisé sensiblement à proximité de limite haute 41 de l'aile extérieur 40. Le pontet de stabilisation 60 se prolonge sensiblement verticalement par des nervures 61 et 62 respectivement sur les faces latérales 43 et 54 des ailes 40 et 50 jusqu'à former deux zones d'appui complémentaires 63 et 64 comprise dans un même plan que les extrémités basses 42 et 53 des ailes extérieure 40 et intérieure 50.

Lors d'un choc important consécutif à un accident le passager est projeté en avant et une part importante de sa masse est transférée alors sur les appuis formés par les pieds. Pour l'invention décrite nous nous limiterons au comportant du pied localisé sur le repose-pied. L'effort transmis par le pied, sur la zone talon et dans l'axe du tibia, exerce une pression sur l'élément absorbant 30, qui comprime les différentes épaisseurs de mousse afin d'être en butée sur la structure du véhicule. La pression exercée par le pied augmentant, les ailes extérieure 40 et intérieure 50 sont comprimées et se déforment de manière à ce que le plan d'appui 33 ne s'incline pas latéralement tout en absorbant l'énergie cinétique. L'inclinaison latérale ou l'effondrement du plan d'appui 33 risqueraient de produire des lésions de la cheville mais également un contact violent avec les pédales voisines, ce qui pourrait engendrer les blessures plus importantes. Grâce au pontet de stabilisation 60 le plan d'appui se déforme légèrement en cuvette afin de maintenir le talon du pied dans sa position initiale, évitant ainsi tout glissement latéral ou vers le haut. Le plan d'appui 33 peut éventuellement se fendre au niveau de la zone d'appui du talon en fin d'absorption, la fente ne se propageant pas au-delà du pontet de stabilisation 60 pour ne pas désolidariser l'aile extérieur 40 de l'aile intérieure 50.
Les points d'appui intérieur 37 et extérieur 36 viennent compléter le contrôle de l'écrasement de l'élément absorbant 30 en permettant d'obtenir un point fixe pour la zone d'appui des orteils et d'avoir ainsi une zone favorisant le pivotement du talon dans le plan d'appui autour de la zone d'appui des orteils.
Grâce à la structure de l'élément absorbant 30 selon l'invention, et en particulier grâce au comportement induit par cette structure le pied situé sur le repose-pied conserve une position idéale pendant la phase d'absorption de l'énergie cinétique limitant le risque de blessures sur les membres inférieurs.

## Revendications

1. Élément absorbant pour pied de passager de véhicule automobile, comportant un plancher (1), une zone formant repose-pied à proximité d'un élément de carrosserie, constituée d'un plan d'appui (33), l'élément absorbant comportant deux ailes latérales (40,50), ayant des extrémités basses (42,53) formant des zones d'appui avec le plancher (1) lors des phases de l'absorption de l'énergie cinétique, localisées de part et d'autre du plan d'appui (33), lesdites ailes (40,50) étant reliées transversalement par un pontet de stabilisation (60) **caractérisé en ce que** le pont et se prolonge sensiblement verticalement par des nervures (61,62) sur les faces latérales (43,54) des ailes (40,50) jusqu'à former deux zones d'appui (63,64) complémentaires comprises dans un même plan que les extrémités basses (42,53) des ailes extérieure (40) et intérieure (50).

2. Élément absorbant de pied selon la revendication 1, **caractérisé en ce que** l'aile extérieure (40) à une direction sensiblement perpendiculaire au plan d'appui (33), et s'étend sur une longueur (D) correspondant à une limite basse (34) du plan d'appui (33), formée par une butée de talon, jusqu'à une limite haute (41) située sensiblement au milieu du plan d'appui (33).

3. Élément absorbant de pied, selon l'une quelconque des revendications précédentes, **caractérisé en ce que** l'aile intérieure (50) est inclinée d'un angle α par rapport à la direction XX' perpendiculaire au plan d'appui (33).

4. Élément absorbant de pied selon la revendication 3, **caractérisé en ce que** l'angle α est compris entre 20° et 60°.

5. Élément absorbant selon l'une quelconque des revendications 3 à 4, **caractérisé en ce que** l'aile intérieure (50) est reliée au plan d'appui (33) par une portion de raccord sensiblement perpendiculaire au plan d'appui (33).

6. Élément absorbant selon l'une quelconque des revendications 3 à 5, **caractérisé en ce que** l'aile intérieure (50) à une longueur sensiblement égale à la longueur d'un plan d'appui (31) sous commande qui jouxte ladite aile intérieure (50).

7. Élément absorbant selon l'une quelconque des revendications 3 à 6, **caractérisé en ce que** l'extrémité basse (53) de l'aile intérieure (50) formant une zone de contact avec le plancher (1) lors de la phase d'absorption de l'énergie cinétique du choc, est proéminente par rapport à la partie inférieure du plan d'appui (31) sous poste de commande.

8. Élément absorbant de pied, selon l'une quelconque des revendications précédentes, **caractérisé en ce que** le plan d'appui (33) comporte une limite haute (35), formée par deux points d'appui (36, 37), sur une partie du passage de roue du véhicule, réparties de part et d'autre du pied.

## Claims

1. Absorbing element for the foot of a passenger in a motor vehicle, comprising a floor (1) and a footrest area consisting of a bearing plane (33) in the vicinity of an element of the bodywork, the absorbing element comprising two side flanges (40, 50) whose lower ends (42, 53) form bearing areas with the floor (1) during the phases of kinetic energy absorption, said flanges (40, 50) being located on the two sides of the bearing plane (33) and being connected transversely by a stabilizing bridge (60), **characterized in that the** bridge is continued approximately vertically by ribs (61, 62) on the side faces (43, 54) of the flanges (40, 50) to form two supplementary bearing areas (63, 64) in the same plane as the lower ends (42, 53) of the outer (40) and inner (50) flanges.

2. Absorbing element for a foot according to Claim 1, **characterized in that** the outer flange (40) is approximately perpendicular to the bearing plane (33) and occupies a length (D) running from a lower limit (34), formed by a heel stop, of the bearing plane (33), to an upper limit (41) at about the middle of the bearing plane (33).

3. Absorbing element for a foot according to either of the preceding claims, **characterized in that** the inner flange (50) is inclined at an angle α with respect to the direction XX', which is perpendicular to the bearing plane (33).

4. Absorbing element for a foot according to Claim 3, **characterized in that the** angle α is between 20° and 60°.

5. Absorbing element according to either of Claims 3 and 4, **characterized in that** the inner flange (50) is connected to the bearing plane (33) by a connecting portion approximately perpendicular to the bearing plane (33).

6. Absorbing element according to any one of Claims 3 to 5, **characterized in that** the length of the inner flange (50) is approximately equal to the length of a bearing plane (31) underneath a control next to said inner flange (50).

7. Absorbing element according to any one of Claims 3 to 6, **characterized in that** the lower end (53) of the inner flange (50) forming an area of contact with the floor (1) during the phase of absorption of the kinetic energy of the impact projects from the lower part of the bearing plane (31) underneath the control position.

8. Absorbing element for a foot according to any one of the preceding claims, **characterized in that** the bearing plane (33) has an upper limit (35), formed by two bearing points (36, 37) resting on part of the wheel housing of the vehicle, one on either side of the foot.

## Patentansprüche

1. Absorbierendes Element für den Fuß eines Insassen eines Kraftfahrzeugs, das einen Boden (1) und eine eine Fußstütze in der Nähe eines Karosserieelements bildende Zone aufweist, die aus einer Auflageebene (33) besteht, wobei das absorbierende Element zwei Seitenflügel (40, 50) mit unteren Enden (42, 53) aufweist, die in Phasen der Absorption der kinetischen Energie Auflagezonen mit dem Boden (1) bilden, die zu beiden Seiten der Auflageebene (33) lokalisiert sind, wobei die Flügel (40, 50) in Querrichtung durch eine Stabilisierungsbrücke (60) verbunden sind, **dadurch gekennzeichnet, dass** die Brücke sich im Wesentlichen senkrecht durch Rippen (61, 62) auf den Seitenflächen (43, 54) der Flügel (40, 50) verlängert, bis zwei komplementäre Auflagezonen (63, 64) gebildet werden, die in der gleichen Ebene enthalten sind wie die unteren Enden (42, 53) der äußeren (40) und inneren Flügel (50).

2. Absorbierendes Fußelement nach Anspruch 1, **dadurch gekennzeichnet, dass** der äußere Flügel (40) eine Richtung im Wesentlichen lotrecht zur Auflageebene (33) hat und sich über eine Länge (D) entsprechend einer Untergrenze (34) der Auflageebene (33), die von einem Absatzanschlag geformt wird, bis zu einer Obergrenze (41) erstreckt, die sich im Wesentlichen in der Mitte der Auflageebene (33) befindet.

3. Absorbierendes Fußelement nach einem der vorhergehenden Ansprüche, **dadurch gekennzeichnet, dass** der innere Flügel (50) um einen Winkel α bezüglich der Richtung XX' lotrecht zur Auflageebene (33) geneigt ist.

4. Absorbierendes Fußelement nach Anspruch 3, **dadurch gekennzeichnet, dass** der Winkel α zwischen 20° und 60° liegt.

5. Absorbierendes Element nach einem der Ansprüche 3 bis 4, **dadurch gekennzeichnet, dass** der innere Flügel (50) mit der Auflageebene (33) durch einen Anschlussabschnitt im Wesentlichen lotrecht zur Auflageebene (33) verbunden ist.

6. Absorbierendes Element nach einem der Ansprüche 3 bis 5, **dadurch gekennzeichnet, dass** der innere Flügel (50) eine Länge im Wesentlichen gleich der Länge einer Auflageebene (31) unter einer Steuerung hat, die an den inneren Flügel (50) angrenzt.

7. Absorbierendes Element nach einem der Ansprüche 3 bis 6, **dadurch gekennzeichnet, dass** das untere Ende (53) des inneren Flügels (50), das in der Absorptionsphase der kinetischen Energie des Aufpralls eine Kontaktzone mit dem Boden (1) bildet, bezüglich des unteren Bereichs der Auflageebene (31) unter dem Bedienungsplatz vorsteht.

8. Absorbierendes Fußelement nach einem der vorhergehenden Ansprüche, **dadurch gekennzeichnet, dass** die Auflageebene (33) eine Obergrenze (35) aufweist, die von zwei Auflagepunkten (36, 37) in einem Teil des Radkastens des Fahrzeugs gebildet wird, die zu beiden Seiten des Fußes verteilt sind.
